# EUROPEAN PATENT APPLICATION

(11) **EP 1 923 876 A1**
(43) Date of publication of application: **21.05.2008**
(21) Application number: 07021827.6
(22) Date of filing: 09.11.2007
(51) Int. Cl.: G11B 7/135, G02B 5/18

(54) **Optical pickup device**

(30) Priority: 17.11.2006 JP 2006311973
(71) Applicant: Funai Electric Co., Ltd., Daito-shi, Osaka 574-0031 (JP)
(72) Inventor: Takemoto, Seiji, Daito-shi Osaka 574-0013 (JP)
(74) Representative: Beetz & Partner

(57) **Abstract**

An optical pickup device includes two laser light sources, one objective lens, and a beam shaping mirror. The mirror converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface. Diffraction gratings which are different types each other are formed respectively on the transmission surface and the reflection surface. The diffraction gratings which are formed respectively on the transmission surface and the reflection surface diffract at least the laser beam having one wavelength of the two wavelengths such that dispersion by the refracting action at the transmission surface is canceled out using the dispersion by the diffracting action at the transmission surface and the reflection surface.

## Description

### BACKGROUND OF THE INVENTION

### 1. Field of the Invention

The present invention relates to an optical pickup device, in particular, the present invention relates to an optical pickup device which is compatible with any two kinds of optical discs among a CD (compact disc), a DVD (digital versatile disc), a BD (Blu-ray Disc or the like: high density optical disc utilizing blue laser beam), and the like.

### 2. Description of Related Art

For example, in a two wavelength and one lens type optical pickup device which is applicable to two kinds of optical discs (for example CD, DVD and BD) in which different wavelengths are used by one objective lens, it is necessary to make a beam spot that is formed by the objective lens in a circular shape which has a small diameter in order to obtain enough reproducing signal from any kind of the optical discs. Further, it is also necessary to correct inclination and displacement of position of the beam with respect to an optical axis so that all the laser beams are input to the objective lens through the same optical path.

As for the spot shape JP-A-2005-309351 and the like have proposed an optical pickup device in which correction of rim strength (that is, peripheral intensity ratio of light beam which is input to the objective lens) is performed utilizing a beam shaping element (for example, a prism, a cylindrical lens or the like) that converts a laser beam from an elliptic shape beam to a circular shape beam. Further as for the optical path of the laser beam, JP-A-2000-099978, JP =A-2002-208163 and JP-A-2003-030887 proposed the two wavelength and one lens type optical pickup device which combines the optical paths with respect to the objective lens by a prism that has beam shaping function. These prisms have a surface which transmits a laser beam having one wavelength and reflects a laser beam having the other wavelength and have structures to combine the optical paths at the surface.

However, when the beam shaping elements which are proposed in JP-A-2005-309351 are disposed for every wavelength, it makes the whole optical system of the optical pickup device larger and more complicated. Further the two wavelength and one lens type optical pickup devices which is proposed in JP-A-2000-099978, JP-A-2002-208163 and JP-A-2003-030887 do not perform the beam shaping for the laser beam having a wavelength which is reflected by the surface which combines optical paths in the prism. That is to say, the beam shaping is performed on only one wavelength, as a result, high output power is necessary for a laser light source which emits laser beam having the other wavelength.

### SUMMARY OF THE INVENTION

In view of the above described problem, it is an object of the present invention to provide an optical pickup device which is able to obtain good signal by the beam shaping for two wavelengths and the correction of inclination and displacement of position with respect to an optical axis even though the device has a simple and compact structure.

A two wavelength and one lens type optical pickup device in an aspect of the present invention is applicable to two kinds of optical discs in which different wavelengths are used by two laser light sources which emit laser beams having different wavelengths with each other and one objective lens and includes a beam shaping mirror. The beam shaping mirror is in an optical path between the objective lens and the two laser light sources. And the beam shaping mirror converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface. Diffraction gratings which are different types each other are formed on the transmission surface and the reflection surface. The diffraction gratings which are formed respectively on the transmission surface and the reflection surface diffract at least the laser beam having one wavelength of the two wavelengths such that dispersion by the refracting action on the transmission surface is canceled out using the dispersion by the diffracting action on the transmission surface and the reflection surface.

### BRIEF DESCRIPTION OF THE DRAWINGS

Fig. 1 is a schematic diagram to show an embodiment of an optical pickup device;
Figs. 2A and 2B are diagrams to show an optical path and a cross section of a beam shaping mirror;
Figs. 3A to 3C are diagrams of an optical path for explaining correction of inclination and displacement of position with respect to an optical axis of a beam shaping mirror; and
Figs. 4A and 4B are schematic diagrams to explain parameters used in simulation of beam shaping.

### DETAILED DESCRIPTION OF THE PREFERRED EMBODIMENTS

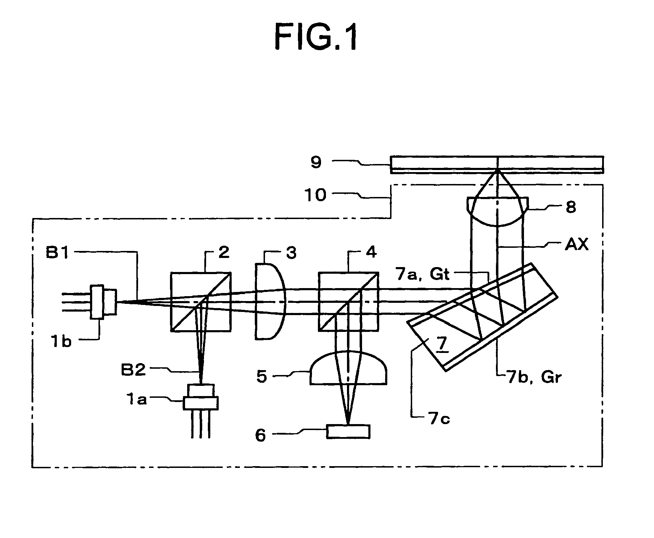

Hereinafter embodiment and the like of an optical pickup device in accordance with the present invention will be described with reference to the attached drawings. In Fig. 1 general structure of one embodiment of an optical pickup device is shown schematically. This optical pickup device 10 is a two wavelength and one lens type optical pickup device which is applicable to two kinds of optical discs 9 in which different wavelengths are used by two laser light sources having different oscillation wavelengths (the light sources are composed of a light source mounted on a semiconductor laser 1a for red laser and a light source mounted on a semiconductor laser 1b for blue laser) and one objective lens 8. And the device has a structure which can perform recording and reproducing of information for each of the two kinds of optical discs 9.

The two kinds of optical discs 9 which are supposed here are, for example, a first optical disc which is applicable to blue laser having wavelength of λ1 405 nm and a second optical disc which is applicable to red laser having wavelength of λ2 650 nm. The first disc is a high density optical disc having base plate thickness of 0.1 mm, numerical aperture (NA) of 0.85 and using blue laser beam. The second disc is a DVD having base plate thickness of 0.6 mm and NA of 0.6 to 0.65. However, wavelength which are used are not limited to these example, and an optical disc which is applicable to infrared laser having wavelength of λ3 780 nm, i.e., a CD having base plate thickness of 1.2 mm, NA of 0.45 to 0.5 may be utilized as the first or second optical disc. Further as for recording medium, the present invention is not limited to the optical disc and can be applied to any optical information recording medium other than optical disc.

The optical pickup device 10 which is shown in Fig. 1 is equipped with the semiconductor laser 1a for red laser, the semiconductor laser 1b for blue laser, a dichroic prism 2, a collimator lens 3, a beam splitter 4, a condenser lens 5, a photo detector 6, a beam shaping mirror 7, an objective lens 8 and the like. Hereafter, an optical structure of the optical pickup device 10 will be explained in an order along its optical path.

The optical pickup device 10 includes the light source mounted on the semiconductor laser 1a for red laser and the light source mounted on the semiconductor laser 1b for blue laser as the laser light sources as above described. And recording or reproducing of the optical information to the corresponding optical disc 9 is performed using a blue laser beam B1 having wavelength of λ1 or a red laser beam B2 having wavelength of λ2, which is emitted by lighting-up of any one of the two laser light sources (λ1 < λ2).

The laser beam B1 or B2 which is emitted from the semiconductor laser 1a or 1b is input to the dichroic prism 2. The dichroic prism 2 is an optical path combining element which combines the optical paths of the blue laser beam B1 and the red laser beam B2. Therefore, the blue laser beam B1 which is output from the semiconductor laser 1b passes the dichroic prism 2 and the red laser beam B2 which is output from the semiconductor laser 1a is reflected by the dichroic prism 2, as a result, the optical paths of the laser beam B1 and B2 are combined.

The laser beam B1 or B2 which is output from the dichroic prism 2 is converted into beam of parallel light by the collimator lens 3, then a part of it passes through the beam splitter 4. The beam splitter 4 is an optical path dividing element which divides an optical path from the respective semiconductor lasers 1a and 1b to the optical disc 9 from an optical path from the optical disc 9 to the photo detector 6. And the beam splitter 4 functions as a half mirror to divide light amount of input light in two to transmitted light and reflected light.

The laser beam B1 or B2 which passes the beam splitter 4 is input to the beam shaping mirror 7. The beam shaping mirror 7 is composed of a transparent member 7c which has a trapezoidal shape cross section. The respective laser beam B1 and B2 are input to a transmission surface 7a, reflected by a reflection surface 7b which is not parallel to the transmission surface 7a, and output from the transmission surface 7a. The optical path of each the laser beam B1 or B2 is bent at substantially ninety (90) degrees to a direction of the objective lens 8 by a function of the beam shaping mirror 7 as an upstand mirror and at the same time light intensity distribution of the laser beam is converted from an elliptic shape to a circular shape by a beam shaping function. A detail of the beam shaping mirror 7 will be described later.

The laser beam B1 or B2 which is output from the beam shaping mirror 7 is condensed by the objective lens 8, then reaches a recording surface of the optical disc 9 for image forming. When the information is reproduced, the laser beam B1 or B2 which is reflected on the recording surface of the optical disc 9, passes the objective lens 8, and it is reflected by the beam shaping mirror 7, then a part of it is reflected by the beam splitter 4. The laser beam B1 or B2 which is reflected by the beam splitter 4, is condensed by the condenser lens 5, and then reaches a light receiving surface of the photo detector 6 for image forming. The photo detector 6 detects the light information of the laser beam B1 or B2 which is received to output as an electric signal.

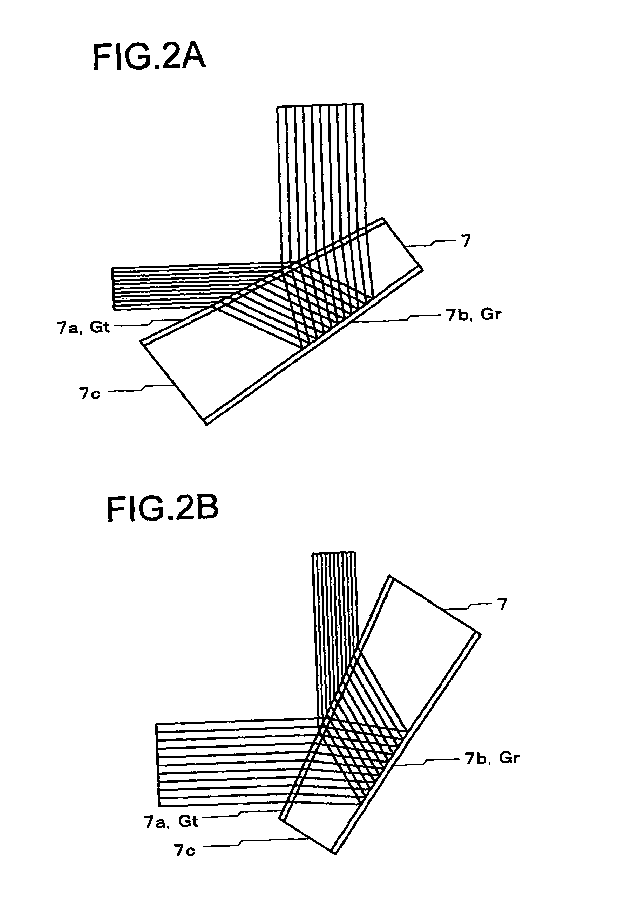

Generally in a beam shaping in which the laser beam is converted from the elliptic shape beam to the circular shape beam, there are a type that enlarges beam diameter in minor axis direction of a cross section of the elliptic beam and a type that reduces the beam diameter in major axis direction of the cross section of the elliptic beam. In the optical pickup device 10 which is shown Fig. 1, the beam shaping employs the type which enlarges the beam diameter in the minor axis direction of the cross section of the elliptic beam. However, it is possible to employ the beam shaping of the type in which the beam diameter is reduced in the major axis direction of the cross section of the elliptic beam in the optical pickup device 10 by change of a layout of the beam shaping mirror 7. In Fig. 2A a layout of the beam shaping mirror 7 and optical path are shown when the beam diameter is enlarged in the minor axis direction of the cross section of the elliptic beam. And in Fig. 2B a layout of the beam shaping mirror 7 and optical path are shown when the beam diameter is reduced in the major axis direction of the cross section of the elliptic beam.

When either type shown in Figs. 2A and 2B is employed for the beam shaping, the light intensity distribution of the laser beam can be converted from the elliptic shape to the circular shape which is ideal by adjustment of angle, space and the like formed by the transmission surface 7a and the reflection surface 7b to prescribed values. Therefore, it is possible to form a good beam spot which has high rim strength on the recording surface of the optical disc 9. At this point the reflection function of the reflection surface 7b can be obtained by forming a metal film or a dielectric multilayer on the transparent member 7c, for example.

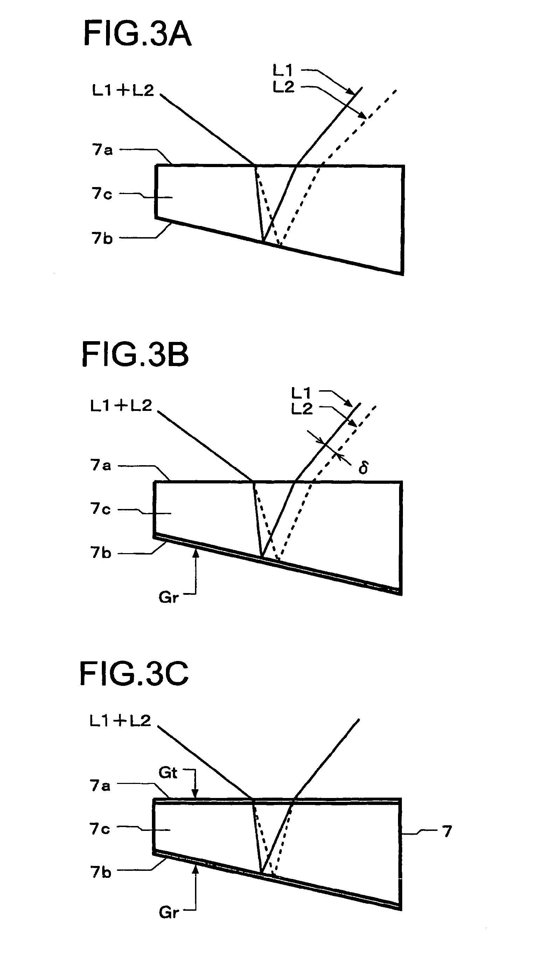

As for general prism type beam shaping element which has been well known heretofore, a transparent member which has a transmission surface and a reflection surface is employed to perform the beam shaping. The transmission surface and the reflection surface are not parallel each other. Because of this, the laser beam which is input to the transmission surface is made refract at different angle according to wavelength by dispersion characteristic of the transparent member. For example, as shown in Fig. 3A, if the blue laser light L1 and the red laser light L2 are input from the transparent surface 7a to the transparent member 7c at the same incident angle, position and direction of output laser light L1 and L2 from the transparent member 7c become different by difference of an angle of refraction at the transparent surface 7a i.e., dispersion characteristic when the lights are input to the transparent member 7c, because refractive index of the blue laser light L1 is larger than the refractive index of the red laser light L2. This means that displacement of inclination and position is caused with respect to the optical axis of the laser beam having one wavelength of the two wavelengths. As a result, correction must be performed by adding optical parts such that the two laser lights L1 and L2 are input in the same optical path to the objective lens 8. In this embodiment, as shown in Fig. 1, the problem is solved by disposing diffraction gratings Gt and Gr which are different types each other respectively at the transmission surface 7a and the reflection surface 7b of the beam shaping mirror 7.

The diffraction gratings Gr and Gt which are disposed in the beam shaping mirror 7 are both surface relief type diffraction gratings on which linear grooves are formed in certain intervals. However, pitches of the diffraction grating are different each other and the diffraction grating Gr is formed in a reflection type and the diffraction grating Gt is formed in a transmission type. And the diffraction grating Gr and Gt which are formed respectively on the transmission surface 7a and the reflection surface 7b have a structure by which the blue laser beam B1 is not diffracted but the red laser beam B2 is diffracted such that dispersion by the refracting action at the transmission surface 7a is cancelled out using the dispersion by the diffracting action at the transmission surface 7a and the reflection surface 7b. In other words, the device has a structure in which two kinds of diffraction structure perform two kinds of diffraction corresponding to the laser beam having one wavelength λ2.

In the case where the diffraction grating which is disposed in the beam shaping mirror 7 is only one kind, though the dispersion by the refracting action at the transmission surface 7a is intended to be canceled out using the dispersion by the diffracting action at the transmission surface 7a or the reflection surface 7b, position of the laser light L1 output from the transparent member 7c becomes different from that of the laser light L2 output from the transparent member 7c. For example, as shown in Fig. 3B, if the diffraction grating Gr for red laser is formed only on the reflection surface 7b, inclination state of the respective laser lights L1 and L2 becomes the same by inclination correction of optical axis of the red laser light L2, however, optical axis misalignment δ of the red laser light L2 with respect to the blue laser light L1 is still caused. This optical axis misalignment δ becomes cause of generation of aberration such as coma aberration.

As shown in Fig. 3C, if the diffraction gratings Gt and Gr are formed respectively on the transmission surface 7a and reflection surface 7b, correction of the optical axis inclination and the optical axis misalignment of the laser beam having the wavelength λ2 can be performed by diffracting the red laser light L2 without diffracting the blue laser light L1, such that the dispersion by the refracting action at the transmission surface 7a is canceled out using the dispersion by the diffracting action at the transmission surface 7a and the reflection surface 7b. Because the laser beams corresponding to the respective laser lights L1 and L2 become common axis state by the diffraction of the red laser light L2, the blue laser beam B1 and the red laser beam B2 can be input to the objective lens 8 through the same optical path.

Next, concrete structure of the diffraction gratings Gt and Gr which are formed on the transmission surface 7a and the reflection surface 7b in the beam shaping mirror 7 will be explained on the basis of result of simulation shown in Table 1. In this simulation, assuming that the laser beams which are input to the beam shaping mirror 7 are blue laser beam B1 and the red laser beam B2, the blue laser beam B1 is not diffracted, and the red laser beam B2 is diffracted by the diffraction grating Gr and Gt. Further, assuming that material of the transparent member 7c which forms the beam shaping mirror 7 is polymethyl methacrylate (PMMA), and refractive index for d line (nd) is 1.49, the Abbe's number (vd) is 58.

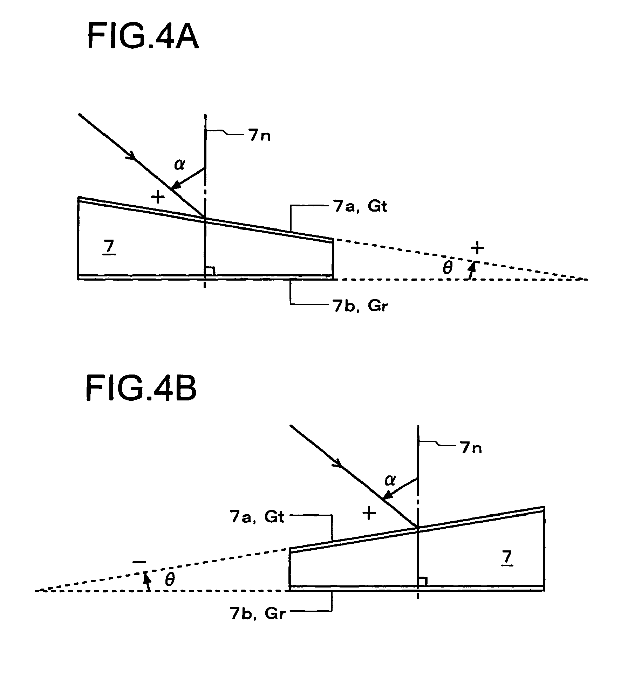

Parameters which are used in the simulation of the diffraction grating Gr and Gt are shown in Fig. 4A and Fig. 4B. Fig. 4A shows an incident angle α and a wedge angle θ in the case where the beam diameter is enlarged in the minor axis direction of cross section of the elliptic beam as shown in Fig. 2A, i.e., beam shaping ratio is larger than 1, and Fig. 4B shows the incident angle α and the wedge angle θ in the case where the beam diameter is reduced in the major axis direction of cross section of the elliptic beam as shown in Fig. 2B, i.e., beam shaping ratio is smaller than 1. The incident angle α (degree) is an angle (acute angle) which is formed by the incident light to the beam shaping mirror 7 and a normal line 7n of the reflection surface 7b, and it is defined that it is positive when it goes from the normal line 7n in counter clockwise. The wedge angle θ (degree) is an angle (acute angle) which is formed by the transmission surface 7a and the reflection surface 7b, and it is defined that it is positive when it goes from the reflection surface 7b in clockwise if the incident angle α is positive.

The incident angle α and the wedge angle θ are set before following observation. The beam spot which is formed by the respective laser beams B1 and B2 which are output from the beam shaping mirror 7 is observed as changing grating constant (line / µm) of the diffraction gratings Gt and Gr which are formed on the transmission surface 7a and the reflection surface 7b and order of diffraction (clockwise direction is positive and counter clockwise direction is negative with reference to zero-order light). Then a condition by which the direction and position of the red laser beam B2 with respect to the blue laser beam B1 become substantially the same is decided from result of the observation. At that time, the incident angle α is adjusted such that an angle which is formed by the input light and the output light at the beam shaping mirror 7 becomes ninety degrees. By the result of the simulation, it is ascertained that the direction and the position of the laser beams B1 and B2 having two wavelengths λ1 and λ2 can be made substantially the same by correction of influence of color dispersion if the grating constant and the order of diffraction are adequately selected for respective wedge angles θ shown in Table 1. At this point because the beam shaping ratio is changed in response to the wedge angle θ, setting of the wedge angle θ should be performed in consideration of difference of light intensity distribution of the laser beam due to used light source and the like.

As above described, because the optical pickup device 10 has a structure in which the diffraction gratings Gt and Gr which are different type each other are formed on the transmission surface 7a and the reflection surface 7b of the beam shaping mirror 7 and the red laser beam B2 having the wavelength of λ2 is diffracted by the diffraction gratings Gt and Gr which are formed respectively on the transmission surface 7a and the reflection surface 7b such that the dispersion by the refracting action at the transmission surface 7a is canceled out using the dispersion by the diffracting action at the transmission surface 7a and the reflection surface 7b, it is possible to correct inclination and displacement of position with respect to an optical axis AX (so called correction for common axis) without increasing number of parts such that the laser beams B1 and B2 having two wavelengths λ1 and λ2 are input to the objective lens 8 through the same optical path. In this way, it becomes possible to focus sufficiently beam spot for two wavelengths λ1 and λ2 to be good one which has high rim strength and light intensity distribution close to circular shape. Further, it becomes possible to compose whole optical system smaller and simpler in comparison with a case in which a beam shaping element such as cylindrical lens or the like is disposed for each of wavelengths.

As a result, it is possible to obtain good signal (for example, recording signal or reproducing signal) by the beam shaping of the two wavelengths λ1 and λ2 and correction of the inclination and the displacement of position with respect to the optical axis AX though the device has simple and compact structure. Because the laser beam can be input to the objective lens 8 through the same optical path even if any of the laser beams B1 and B2 having the two wavelengths λ1 and λ2 respectively is used, compatibility for the two kinds of optical discs 9 can be secured. For example, the device can be applied to two kinds of optical discs 9 of a BD and a DVD when the blue laser beam B1 and the red laser beam B2 are used.

Because the diffraction gratings Gt and Gr has a structure in which the blue laser beam B1 is not diffracted but the red laser beam B2 is diffracted, light use efficiency of the blue laser beam B1 which is used without diffraction can be improved. As a result, required output power for the semiconductor laser 1b can be suppressed. Further, because the beam shaping mirror 7 is composed of the transparent member 7c having the trapezoidal shape cross section, downsizing of the optical pickup device 10 can be attained more effectively.

Because the diffraction gratings Gr and Gt have a structure in which the diffraction grating Gr which is formed on the reflection surface 7b corrects displacement of position with respect to the blue laser beam B1 by diffracting the red laser beam B2 and the diffraction grating Gt which is formed on the transmission surface 7a corrects displacement of inclination with respect to the blue laser beam B1 by diffracting the red laser beam B2 which is diffracted by the diffraction grating Gr on the reflection surface 7b, the color dispersion at the transmission surface 7a is suppressed when the laser beams B1 and B2 are input to the beam shaping mirror 7. By this reason, difference of position and inclination of the laser beam B1 and B2 at the reflection surface 7b also can be suppressed. As a result, the diffracting action which is required for the diffraction gratings Gt and Gr that are formed on the transmission surface 7a and the reflection surface 7b respectively can be reduced and the correction of the inclination and the displacement of position with respect to the optical axis AX can be attained more effectively.

At this point in the above described embodiment, the optical pickup device has a structure in which the laser beam B2 having the wavelength λ2 is diffracted by the diffraction gratings Gt and Gr which are formed respectively on the transmission surface 7a and the reflection surface 7b such that the dispersion by the refracting action at the transmission surface 7a is canceled out using the dispersion by the diffracting action at the transmission surface 7a and the reflection surface 7b. However the optical pickup device may have a structure in which the diffraction gratings Gt and Gr diffract the laser beam B1 having wavelength of λ1 instead of a structure in which the diffraction gratings Gt and Gr diffract the laser beam B2 having wavelength of λ2. Or the device may have a structure in which the diffraction gratings Gt and Gr diffract both of the laser beams B1 having wavelength λ1 and B2 having the wavelengths λ2. It is possible to obtain the same effect as the above described embodiment by these structures.

As will be appreciated from the foregoing if diffraction gratings which are different types each other are formed on the transmission surface and the reflection surface respectively in the beam shaping mirror in the two wavelength and one lens type optical pickup device and the diffraction gratings which are formed respectively on the transmission surface and the reflection surface diffract at least the laser beam having one wavelength of the two wavelengths such that the dispersion by the refracting action at the transmission surface is canceled out using the dispersion by the diffracting action at the transmission surface and the reflection surface, the inclination and the displacement of position with respect to the optical axis can be corrected such that the two laser beams having different wavelengths are input to the objective lens through the same optical path without increasing number of parts. In this way it becomes possible to focus sufficiently beam spot for two wavelengths to be good one which has high rim strength and light intensity distribution close to circular shape. Further, it becomes possible to compose whole optical system smaller and simpler in comparison with a case in which a beam shaping element such as cylindrical lens or the like is disposed for each of wavelengths.

As a result, it is possible to obtain good signal (for example, recording signal or reproducing signal) by the beam shaping of the two wavelengths and the correction of inclination and displacement of position with respect to the optical axis though the device has simple and compact structure. Because the laser beam can be input to the objective lens through the same optical path even if any of the two laser beams having different wavelengths is used, compatibility for two kinds of optical discs can be secured. For example, the device can be applied to two kinds of optical discs of a BD and a DVD when the blue laser beam and the red laser beam are used as the laser beams which are emitted from the two laser light sources.

When the diffraction gratings which are formed on the transmission surface and the reflection surface respectively have a structure in which the laser beam having one wavelength of the two wavelengths is not diffracted but the laser beam having the other wavelength is diffracted, because light use efficiency of the laser beam which is used without diffraction can be improved, required output power for the laser light source can be suppressed. Further, if the beam shaping mirror is composed of a transparent member having a trapezoidal shape cross section, downsizing of the optical pickup device can be attained more effectively.

When the diffraction gratings have a structure in which the diffraction grating which is formed on the reflection surface diffracts the laser beam having one wavelength to correct displacement of position of the beam with respect to the laser beam having the other wavelength and the diffraction grating which is formed on the transmission surface diffracts the laser beam having one wavelength which is diffracted by the diffraction grating on the reflection surface to correct displacement of inclination of the beam with respect to the laser beam having the other wavelength, because the color dispersion at the transmission surface is suppressed when the laser beams are input to the beam shaping mirror, difference of position and inclination of the laser beams on the reflection surface also can be suppressed. As a result the diffracting action which is required for the diffraction gratings that are formed on the transmission surface and the reflection surface respectively can be reduced and the correction of the inclination and displacement of position with respect to the optical axis can be attained more effectively.

**TABLE 1**

| wedge angle θ (deg) | incident angle α (deg) | grating constant (line / µm) | | order of diffraction | optical axis misalignment δ (µm) | beam shaping ratio |
|---|---|---|---|---|---|---|
| 14 | 58.7 | transmission surface | 0.0118 | -1 | - | 2.53 |
| | | reflection surface | 0.0115 | -1 | | |
| 10 | 54.3 | transmission surface | 0.0123 | -1 | - | 1.74 |
| | | reflection surface | 0.0080 | -1 | | |
| 5 | 49.4 | transmission surface | 0.0120 | -1 | - | 1.28 |
| | | reflection surface | 0.0040 | -1 | | |
| -5 | 40.6 | transmission surface | 0.0121 | -1 | - | 0.78 |
| | | reflection surface | 0.0040 | 1 | | |
| -10 | 35.7 | transmission surface | 0.0121 | -1 | - | 0.58 |
| | | reflection surface | 0.0080 | 1 | | |

## Claims

1. A two wavelength and one lens type optical pickup device which is applicable to two kinds of optical discs in which different wavelengths are used by two laser light sources which emit laser beams having different wavelengths each other and one objective lens, the device comprising:
a beam shaping mirror in an optical path between the objective lens and the two laser light sources which converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface,
the device is **characterized by** that
diffraction gratings which are different types each other formed on the transmission surface and the reflection surface and
the diffraction gratings which are formed respectively on the transmission surface and the reflection surface diffract at least the laser beam having one wavelength of the two wavelengths such that dispersion by the refracting action at the transmission surface is canceled out using the dispersion by the diffracting action at the transmission surface and the reflection surface.

2. The optical pickup device according to claim 1, **characterized by** a structure in which the diffraction gratings which are formed respectively on the transmission surface and the reflection surface do not diffract the laser beam having one wavelength of the two wavelengths but diffract the laser beam having the other wavelength.

3. The optical pickup device according to claim 1 or claim 2, **characterized by** a structure in which the beam shaping mirror is composed of a transparent member that has a trapezoidal shape cross section.

4. The optical pickup device according to any one of claim 1 to claim 3, **characterized by** a structure in which the diffraction grating which is formed on the reflection surface diffracts the laser beam having one wavelength to correct displacement of position of the beam with respect to the laser beam having the other wavelength and the diffraction grating which is formed on the transmission surface diffracts the laser beam having one wavelength which is diffracted by the diffraction grating on the reflection surface to correct displacement of inclination of the beam with respect to the laser beam having the other wavelength.

5. The optical pickup device according to any one of claim 1 to claim 4, **characterized by** a structure in which the two laser light sources are a laser light source which emits a blue laser beam and a laser light source which emits a red laser beam.

6. A two wavelength and one lens type optical pickup device which is applicable to two kinds of optical discs in which different wavelengths are used by two laser light sources which emit respectively blue laser beam and red laser beam, and one objective lens, the device comprising:
a beam shaping mirror in an optical path between the objective lens and the two laser light sources which converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface,
the beam shaping mirror is **characterized by** that
the beam shaping mirror is composed of a transparent member that has a trapezoidal shape cross section,
diffraction gratings which are different types each other formed on the transmission surface and the reflection surface and
the diffraction grating which is formed on the reflection surface does not diffract the blue laser beam but diffracts the red laser beam to correct displacement of position of the red laser beam with respect to the blue laser beam and the diffraction grating which is formed on the transmission surface does not diffract the blue laser beam but diffracts the red laser beam to correct displacement of inclination of the red laser beam with respect to the blue laser beam such that dispersion by the refracting action at the transmission surface is canceled out using the dispersion by the diffracting action at the transmission surface and the reflection surface.
